**Europäisches Patentamt**

**European Patent Office**

**Office européen des brevets**

(19)

(11) Veröffentlichungsnummer : **0 506 648 A1**

## (12) EUROPÄISCHE PATENTANMELDUNG

(21) Anmeldenummer : **92890063.8**

(22) Anmeldetag : **18.03.92**

(51) Int. Cl.$^5$ : **C08J 11/08**

(30) Priorität : **26.03.91 AT 661/91**

(43) Veröffentlichungstag der Anmeldung :
**30.09.92 Patentblatt 92/40**

(84) Benannte Vertragsstaaten :
**BE CH DE FR GB IT LI SE**

(71) Anmelder : **Wittner, Ernestine Ch., Dr.**
**Breinbauerweg 19**
**A-4040 Linz (AT)**

(72) Erfinder : **Wittner, Ernestine Ch., Dr.**
**Breinbauerweg 19**
**A-4040 Linz (AT)**

(54) **Verfahren zur Herstellung einer Form- bzw. Pressmasse.**

(57) Gegenstand der Erfindung ist ein Verfahren zur Wiederverwertung von Polyvinylacetat und/oder Polyacryl und/oder Polymethylmethacrylat bzw. Produkten, in welchen Polyvinylacetat und/oder Polyacryl und/oder Polymethylmethacrylat zumindest teilweise enthalten sind, unter gleichzeitiger Herstellung von Form- bzw. Preßmassen, Überzugsmitteln, Klebstoffen und anderen Recycling-produkten.

Zur Herstellung dieser Recyclingprodukte werden die Produkte in welchen die genannten Kunststoffe zumindest teilweise enthalten sind, ohne wesentliche Wärmeeinwirkung durch Zugabe geeigneter Lösungsmittel solande erweicht, bis sie auf Grund ausreichender Viskosität entweder als Bindemittel als zu verpressendes Material selbst oder als Überzugsmittel bzw. Klebstoff wiedereinsetzbar sind.

EP 0 506 648 A1

Die Erfindung betrifft ein Verfahren zur Herstellung einer Form- bzw. Preßmasse, wobei Teilchen eines zu formenden bzw. zu verpressenden Materials mit einem Bindemittel aus Polyvinylacetat bzw. polyvinylacetathaltigen Massen und/oder aus Polyacryl bzw. polyacrylhaltigen Massen und/oder aus Polymethylmethacrylat bzw. polymethylmethacrylathaltigen Massen in Berührung gebracht und anschließend ausgeformt bzw. verpreßt werden. Weiters wird ein Verfahren zur Herstellung einer Form- bzw. Preßmasse aus Polyvinylacetat bzw. polyvinylacetathaltigem Material und/oder Polyacryl bzw. polyacrylhaltigem Material und/oder Polymethylmethacrylat bzw. polymethylmethacrylathaltigem Material beschrieben, bei welchem als Rohstoff bereits industriell gefertigte Artikel und/oder Abfälle, welche bei der Produktion dieser Kunststoffe bzw. von Gegenständen aus diesen Kunststoffen anfallen, verwendet werden.

Es ist bekannt, daß Kunststoffe wie Polyvinylacetat oder Polyacryl bzw. Polymethylmethacrylat in ihrem Festigkeitsverhalten instabil gegenüber gewissen Lösungsmitteln sind. Es ist weiters bekannt, daß diese Kunststoffe, zu deren Synthese alljährlich große Mengen an vorwiegend erdölentstammenden Rohstoffen verbraucht werden, zur Fertigung von Massengebrauchsgütern eingesetzt werden.

Gleichzeitig stellen sich jedoch auf dem Gebiet des Umweltschutzes Forderungen nach primärrohstoffschonenden Produktionsverfahren und Minimierung bzw. sinnvoller Entsorgung ständig wachsender Mengen an Industrie- und Haushaltsmüll.

Ziel der Erfindung war es daher, ein Verfahren zur Wiederverwertung von Polyvinylacetat und/oder Polyacryl und/oder Polymethylmethacrylat sowie deren Copolymeren oder sonstigen, diese Kunststoffe zumindest teilweise enthaltenden Produkten zu entwickeln, welches außerdem unter geringstmöglichem Aufwand an thermischer Energie die Herstellung von Form- bzw. Preßmassen, Überzugsmitteln, Klebstoffen, etc. erneut ermöglichen sollte. Diese Aufgabe wird erfindungsgemäß dadurch gelöst, daß die zu recyclierenden Kunststoffe ohne wesentliche Wärmeeinwirkung durch Zugabe von Lösungsmitteln wie z.B. Aceton, Toluol, cyclo-Hexanon, Tetrahydrofuran, etc. bis zur Erreichung jener viskosen Konsistenz erweicht werden, welche eine ausreichende Vermengung mit zu formenden bzw. zu verpressenden Feststoffteilchen zuläßt oder welche für eine Formung der Kunststoffe durch beispielsweise Gießen, Sprühen, Recken, Watzen, Aufschäumen, etc. nötig ist oder eine Verwendung als Überzugsmittel, Kleber, etc. ermöglicht.

Als im Sinne des Verfahrens zu recyclierendes Materiat dienten u.a. Verpackungen, ausgediente Tetefonapparate, Abfälle aus der Brillenproduktion, Sanitäreinrichtungsabfälle, Acrylglasabfälle und dgl. mehr, wobei diese Materiatien sowohl sortiert als auch gemischt verarbeitet wurden. Die erhaltenen Sekundärrohstoffprodukte erwiesen sich als dem jeweils angestrebten Verwendungszweck entsprechend fest, gut bearbeitbar und nur gering wasseraufnehmend.

## Patentansprüche

1. Verfahren zur Herstellung einer Form- bzw. Preßmasse, wobei Teilchen eines zu formenden bzw. zu verpressenden Materials mit einem Bindemittel aus Polyvinylacetat bzw. polyvinylacetathaltigen Massen und/oder aus Polyacryl bzw. polvacrylhaltigen Massen und/oder aus Polymethylmethacrylat bzw. polymethylmethacrylathaltigen Massen in Berührung gebracht und anschließend geformt bzw. verpreßt werden, dadurch gekennzeichnet, daß das Bindemittel ohne wesentliche Wärmeeinwirkung durch Zugabe von Lösungsmitteln wie z.B. Aceton, Toluol, cyclo-Hexanon, Tetrahydrofuran, etc. bis zur Erreichung jener viskosen Konsistenz erweicht wird, welche für eine ausreichende Vermengung mit dem zu formenden bzw. zu verpressenden Material notwendig ist.

2. Verfahren nach Anspruch 1, dadurch gekennzeichnet, daß als Bindemittel bereits industriell gefertigte Artikel und/oder Abfälle, welche bei der Produktion von Polyvinylacetat bzw. polyvinylacetathaltigen Gegenständen und/oder Polyacryl bzw. polyacrylhaltigen Gegenständen und/oder Polymethylmethacrylat bzw. polymethylmethacrylathaltigen Gegenständen anfallen, verwendet werden.

3. Verfahren nach einem der Ansprüche 1 bis 2, dadurch gekennzeichnet, daß man als zu formendes bzw. zu verpressendes Material Cellulose oder cellulosehaltige Stoffe, Silikate oder silikathaltige Stoffe, Metalle oder metallhaltige Stoffe, Metalloxide oder metalloxidhaltige Stoffe, Carbonate oder carbonathaltige Stoffe, Sulfate oder sulfathaltige Stoffe verwendet, wobei die genannten Stoffe in Reinform oder als Stoffkombinationen eingesetzt werden können.

4. Verfahren nach einem der Ansprüche 1 bis 3, dadurch gekennzeichnet, daß auch zumindest ein Teil des zu formenden bzw. zu verpressenden Materials vor Zugabe des Bindemittels mit einem oder mehreren Lösungsmittel(n) vorbehandelt wird.

5. Verfahren nach einem der Ansprüche 1 bis 2, dadurch gekennzeichnet, daß Polyvinylacetat bzw. eine polyvinylacetathaltige Masse und/oder Polyacryl bzw. eine polyacrylhaltige Masse und/oder Polymethylmethacrylat bzw. eine polymethylmethacrylathaltige Masse nicht als Bindemittel, sondern als zu formendes bzw. zu verpressendes Material selbst verwendet wird (werden) und als solches (solche) ohne wesentliche Wärmeeinwirkung durch Zugabe von Lösungsmitteln wie z.B. Aceton, Toluol, cyclo-Hexanon, Tetrahydrofuran, etc. bis zur Erreichung jener viskosen Konsistenz erweicht wird (werden), welche für eine Verpressung bzw. Formung durch beispielsweise Gießen, Walzen, Recken, Sprühen, Blasen, Aufschäumen, etc. notwendig ist.

6. Verfahren nach einem der Ansprüche 1 bis 5, dadurch gekennzeichnet, daß die viskos vorliegenden Materialien Polyvinylacetat und/oder Polyacryl und/oder Polymethylmethacrylat bzw. Massen, welche diese drei genannten Kunststoffe zumindest teilweise enthalten, nicht einer speziellen Formung zugeführt werden, sondern als Überzugsmittel bzw. Überzugsmittelbestandteil und/oder als Klebstoff bzw. Klebstoffbestandteil verwendet werden.

7. Verfahren nach einem der Ansprüche 1 bis 6, dadurch gekennzeichnet, daß auch Copolymere von Polyvinylacetat und/oder Polyacryl und/oder Polymethylmethacrylat verwendet werden.

Europäisches
Patentamt

**EUROPÄISCHER RECHERCHENBERICHT**

Nummer der Anmeldung

EP    92 89 0063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | WORLD PATENTS INDEX<br>Derwent Publications Ltd., London, GB;<br>AN 80-44299C (25)<br>& JP-A-55 062 930 (ASAHI JUSHI SANGYO)<br>* Zusammenfassung *<br>--- | 1-3,7 | C08J11/08 |
| X | GB-A-588 849 (THE BERMONDSAY LEATHER COMPANY LIMITED)<br>*INSGESAMT*<br>--- | 1-3,5 | |
| X | US-A-2 406 558 (H. T. NEUMANN)<br>* Spalte 1, Zeile 1 - Spalte 2, Zeile 16 *<br>* Spalte 4, Zeile 23 - Spalte 4, Zeile 52 *<br>--- | 1-3,6 | |
| X | DE-A-2 556 016 (H. KLINGEL ET AL.)<br>* Anspruch 1 *<br>* Seite 5, Zeile 2 - Seite 5, Zeile 8 *<br>--- | 1,2,6 | |
| A | GB-A-1 195 164 (WOLVERHAMPTON METAL (HOLDINGS) LTD)<br>* Ansprüche 1,4 *<br>* Seite 1, Zeile 46 - Seite 1, Zeile 51 * | 1 | RECHERCHIERTE SACHGEBIETE (Int. Cl.5 )<br><br>C08J |

-----

Der vorliegende Recherchenbericht wurde für alle Patentansprüche erstellt

| Recherchenort | Abschlußdatum der Recherche | Prüfer |
|---|---|---|
| DEN HAAG | 24 APRIL 1992 | HALLEMEESCH A.D |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
   Dokument

EPO FORM 1503 03.82 (P0402)